# EUROPEAN PATENT SPECIFICATION

(11) **EP 4 525 625 B1**
(45) Date of publication and mention of the grant of the patent: **19.11.2025**
(21) Application number: 23727842.9
(22) Date of filing: 15.05.2023
(51) Int. Cl.: A21C 3/02, A21C 13/00, A21C 15/00, A21C 15/04, A21D 13/16, A21D 13/19, A21D 13/80, A21D 10/02, A21C 15/02

(54) **PROCESS FOR PRODUCING A PACKAGED BAKERY PRODUCT**
VERFAHREN ZUR HERSTELLUNG EINES VERPACKTEN BACKWARENPRODUKTS
PROCÉDÉ DE FABRICATION D'UN PRODUIT DE BOULANGERIE EMBALLÉ

(30) Priority: 17.05.2022 IT 202200010172
(43) Date of publication of application: 26.03.2025
(73) Proprietor: Barilla G. e R. Fratelli S.p.A., 43122 Parma (IT)
(72) Inventor: FERRARI, Corrado, 43122 Parma (IT); BARBARI, Alberto, 41053 Maranello (BO) (IT); GIOVANETTI, Marco, 43123 Parma (IT)
(74) Representative: Botti & Ferrari S.p.A.
(86) International application number: PCT/EP2023/063003
(87) International publication number: WO 2023/222619

(56) References cited:
- EP-B1- 0 956 782
- WO-A1-98/56266
- BE-A- 419 000
- US-A- 2 130 097
- US-A- 4 674 401
- US-A- 4 821 634

## Description

### Field of application

The present invention relates to the field of food and confectionery industry.

In particular, the invention refers to a method for producing a packaged bakery product, namely a soft-dough bakery product and, more specifically, obtained from naturally leavened dough and possibly filled.

### Prior art

A nutritious breakfast allows to start the day with energy without arriving tired and hungry at lunch break and without lapses in concentration during the morning.

However, despite warnings by physicians, nutritionists, and dietitians, the habit of skipping said important meal and not eating until lunch is entrenched.

Unfortunately, due to the frenetic pace imposed by daily life, in the morning one has often no time to prepare and savor a nutritious breakfast. In order to avoid skipping this meal, more and more people are used to eat a snack on the way to work or once arrived at work.

To this effect, packaged bakery products are useful and are already integral part of the daily nutrition.

At the same time, the increasingly widespread consumption of breakfast outside one's own home, on a means of transport or at the workplace, increases the demand for bakery products having features that are more appropriate to this lifestyle, such as the possibility to divide the product into parts without using cutting tools.

In fact, dividing the snacks into parts facilitates its consumption; for example, it allows to carry out more easily the step of soaking the bakery product into the beverage consumed during breakfast, such as a milk-, tea- or coffee-based beverage, even when said beverage is served inside small containers, such as small coffee cups, or small glasses of vending machines, thus dunking into the beverage one part of the snack at a time.

In this respect, a much-felt need is to divide the snack along a clear-cut break line, without altering the overall structure of the product, and minimizing the formation of fragments or crumbs.

According to EP0956782A1, a naturally leavening dough is prepared and enriched with such fatty matter as margarine. The dough strip is then subjected to a series of successive processing operations of puffing that create a variable number of superpositions of alternate layers of dough and fatty matter. The result of this sequence of operations leads to the formation of a dough strip with a laminated structure, since it is now constituted of two layers of dough with an interposed layer of fatty matter. The laminated dough obtained in this manner is then subjected to continuous leavening, baked in an oven and eventually stuffed, for example with a fatty cheese-and-tomato-base stuffing cream.

US4821634A discloses an in-line dough laminator for forming a dough web into a laminated dough web by overlapping the dough web on itself, said laminator comprising: a. frame means; b. a first conveyer means having a feed end which is reciprocably mounted on said frame means, said conveyer means having a first movable belt with a longitudinal axis direction of belt movement; c. a second conveyer means having a second movable belt with a longitudinal axis of belt movement generally parallel to said first belt direction of movement. The in-line dough laminator is adapted to provide for reciprocating movement of the feed end of the first movable belt.

Neither EP0956782A1 nor US4821634A discloses a ready-to-eat packaged snack for breakfast that can be easily divided into parts without using cutting tools.

Hence, as of today, a ready-to-eat packaged snack for breakfast, that can be easily divided into parts without using cutting tools and without altering the overall structure of the product, minimizing the formation of fragments or crumbs, is especially desired.

The technical problem underlying the present invention is providing a packaged bakery product, in particular a soft-dough bakery product, that can be easily divided into parts without using cutting tools, thus avoiding the above-mentioned drawbacks.

### Summary of the invention

The above-mentioned technical problem is firstly solved by providing a process for obtaining a packaged shelf-stable soft-dough bakery product, possibly filled, comprising the following steps:
a) subjecting at least one dough to a lamination step, so as to obtain a laminated sheet of dough with a thickness between 1 mm and 5 mm;
b) supplying said laminated sheet of dough to a forming unit, wherein said forming unit comprises a depositing conveyor belt and a receiving conveyor belt, said depositing conveyor belt being provided with retractable deposition means adapted to perform a movement of advancement and retraction in relation to said receiving conveyor belt, wherein the depositing conveyor belt has a higher advancement speed compared to that of the receiving conveyor belt;
c) by means of said retractable deposition means and during the movement of advancement and retraction of the latter, carrying out a forming step, by depositing said laminated sheet of dough from the depositing conveyor belt to the receiving conveyor belt, thereby obtaining a folded sheet of dough;
d) subjecting the folded sheet of dough thereby obtained to a compaction step, thereby obtaining a compacted sheet of dough;
e) subjecting the compacted sheet of dough to a leavening step under controlled conditions of temperature and moisture, thereby obtaining a leavened sheet of dough;
f) baking the leavened sheet of dough for a time period between 10 and 40 minutes, preferably between 15 and 25 minutes, and at a temperature between 160°C and 230°C, preferably between 180°C and 200°C, thereby obtaining a baked sheet of dough;
g) optionally, horizontally cutting said baked sheet of dough, thereby obtaining a first layer of baked sheet of dough and a second layer of baked sheet of dough, and providing a layer of filling cream between said first layer and said second layer of baked sheet of dough;
h) providing a packaged shelf-stable soft dough bakery product as single portions, starting from the above-mentioned baked sheet of dough;

wherein the movement of advancement and retraction of the retractable deposition means occurs in a continuous way according to a time cycle with a preset duration;
wherein the retraction movement of the retractable deposition means has a duration between 10-40% with respect to the preset duration of the time cycle of the movement of advancement and retraction of the retractable deposition means;
wherein said compacted sheet of dough obtained during the compaction step d) has a thickness between 4 mm and 22 mm; and
wherein said packaged shelf-stable soft-dough bakery product has an upper surface and an opposite lower surface, said upper surface having a regular pattern with alternating ridges and depressions.

Preferably, the laminated sheet of dough, obtained during the above-mentioned lamination step a), has a thickness between 1 mm and 3 mm, more preferably equal to 2.5 mm.

Advantageously, obtaining a laminated sheet of dough having the specified thickness allows to optimally carry out the following supplying step b) and forming step c); in particular, in this last step said preset thickness allows the laminated sheet of dough to be correctly folded by means of said retractable deposition means and during the movement of advancement and retraction of the latter means, even more in particular according to the further specifications provided below.

In fact, a too thick dough would not be sufficiently ductile and elastic, which are features required for the following forming step c), but a too thin dough, having excessive ductility and elasticity features, would jeopardize the forming step c), since it could not be correctly folded, thus generating irregular corrugations.

Accordingly, during the forming step c), the movement of advancement and retraction of the retractable deposition means occurs in a continuous way according to a time cycle with a preset duration.

In particular, the above-mentioned retractable deposition means advance and retract in a cadenced way, i.e. each time cycle that follows has the same duration of the previous time cycle.

Advantageously, due to the forming step c), the laminated sheet of dough is deposited from the depositing conveyor belt to the receiving conveyor belt, folding the sheet of dough over itself a plurality of times and thus obtaining a folded sheet of dough having a plurality of folds, which are separate and distinct from each other.

It is understood that, for each time cycle that follows, the advancement and the retraction of the above-mentioned retractable deposition means cause the formation of a single fold in the laminated sheet of dough thereby deposited onto the receiving conveyor belt.

In other words, as will be better illustrated below with reference to the detailed description and the figures, the forming step c) in combination with the subsequent steps of the present process results in obtaining a bakery end product whose upper surface has a regular pattern with alternating ridges and depressions and provided with special properties in terms of texture and mechanical strength.

In particular, thanks to said regular pattern with alternating ridges and depressions on its upper surface, as well as thanks to the typical inner features of the baked dough made of the above-mentioned baked sheet of dough, said features being due to both the folding carried out during the forming step c) and also to the processing carried out during the subsequent steps, the present process allows to obtain a bakery product that can be easily divided into parts by applying a little pressure with the fingers and without using cutting tools, and wherein the break line, thereby formed from one of the above-mentioned depressions on its upper surface, is clear and well-defined along the thickness or height of the product.

Accordingly, the retraction movement of the retractable system has a duration between 10-40%, preferably equal to 20%, with respect to the preset duration of the time cycle of the movement of advancement and retraction of the retractable deposition means.

In other words, with respect to the advancement movement, the retraction movement of the retractable deposition means is shorter, the retractable deposition means being advantageously subjected to an acceleration that causes folding of the laminated sheet of dough over itself, as will be described below.

In general, during the forming step c), the laminated sheet of dough is folded over itself at least twice, thereby resulting in a folded sheet of dough accordingly comprising at least three layers of dough.

According to a preferred embodiment, during the forming step c), the laminated sheet of dough is folded over itself twice.

In particular, during the forming step c), the movement of advancement and retraction of the retractable deposition means is carried out so as to fold the laminated sheet of dough over itself twice.

Specifically, at each fold, the laminated sheet of dough is folded over itself twice, thereby accordingly having a total number of three layers of dough, and all the folds create, in the upper surface of the sheet of dough thereby folded, a regular pattern with alternating ridges and depressions that resembles the form of a wave.

In particular, on the upper surface of the sheet of dough thereby folded during the forming step c), said depressions or grooves are 15 mm-30 mm, preferably 20 mm-28 mm, apart from each other.

Preferably, at the ridges of the above-mentioned upper surface, the folded sheet of dough obtained in the forming step c) has a total thickness between 4 mm and 15 mm, more preferably between 5 mm and 8 mm.

Preferably, during the forming step c), the speed of advancement of the receiving conveyor belt is equal to at most 1/3 of the speed of advancement of the depositing conveyor belt.

According to an alternative embodiment, during the forming step c), the laminated sheet of dough is folded over itself four times.

In particular, during the forming step c), the movement of advancement and retraction of the retractable deposition means is carried out so as to fold the laminated sheet of dough over itself four times.

In particular, differently from the previous embodiment, the sheet of dough is folded over itself four times and accordingly has a total number of six layers of dough.

According to this preferred embodiment, at the ridges of the above-mentioned upper surface, the folded sheet of dough has an total thickness between 7 mm and 25 mm, more preferably between 10 mm and 16 mm.

In particular, similarly to the previous embodiment, on the upper surface of the sheet of dough thereby folded during the forming step c), said depressions or grooves are 15 mm-30 mm, preferably 20 mm-28 mm, apart from each other.

Preferably, differently from the previous embodiment, during the forming step c), the speed of advancement of the receiving conveyor belt is equal to 1/6 of the speed of advancement of the depositing conveyor belt.

Preferably, most generally, during the forming step c), the speed of advancement of the receiving conveyor belt is between 2 m/min and 15 m/min, more preferably between 3 m/min and 9 m/min, most preferably between 3.5 m/min and 6.5 m/min.

Advantageously, the speed of advancement of the depositing conveyor belt, which is greater than the speed of advancement of the receiving conveyor belt, allows not to damage the sheet of dough during depositing, and to obtain a regular repeated wave pattern, during the forming step c).

Preferably, the depositing conveyor belt is positioned at a preset height with respect to the receiving conveyor belt.

More preferably, the depositing conveyor belt is positioned at a preset height between 50 mm and 400 mm, more preferably between 100 mm and 150 mm, with respect to the receiving conveyor belt.

According to the present invention, the expression "retractable deposition means" means a retractable deposition system adapted to advance and retract along a sliding path of a preset length, wherein, during the movement of advancement and retraction of the retractable system, the depositing conveyor belt extends and retracts, respectively.

In particular, the sliding path has a resting position, in which the depositing conveyor belt is not or is for only a minimum length above the receiving conveyor belt, and an end-stroke position, in which the depositing conveyor belt is for a maximum length above the receiving conveyor belt, more particularly the depositing conveyor belt has a minimum length when the retractable deposition means or retractable deposition system are in resting position along said sliding path, and the depositing conveyor belt has a maximum length when the retractable deposition means or retractable deposition system are in end-stroke position along said sliding path.

Preferably, the length of said sliding path of the retractable system is between 25 mm and 60 mm, more preferably between 30 mm and 50 mm.

Accordingly, in the compaction step d), the compacted sheet of dough has a thickness between 4 mm and 22 mm, preferably between 5 mm and 15 mm.

Advantageously, the compaction step d) allows to remove air that forms in the hollow spaces of the folds of the sheet of dough deposited onto the receiving conveyor belt during the preceding forming step c); in particular, the air thereby formed in said hollow spaces may compromise the obtainment of well-defined clear break lines along the thickness of the product during the division thereof into parts at the time of consumption, and, thus, air removal prevents obtaining an end product that flakes apart during its division into parts.

Moreover, by removing the air formed in the hollow spaces of the folds of the deposited sheet of dough, also the optional step g) of horizontally cutting and filling and its sub-steps, which are described below, in particular the operation of horizontally cutting, can be carried out more easily without the risk that said hollow spaces may cause an horizontal irregular cut of the baked sheet of dough, as can be noted better later.

Preferably, during the above-mentioned step a), the dough subjected to lamination has a texture between 35 N and 48 N, more preferably between 38 N and 45 N, measured in terms of extrusion force, at the temperature of 18°C and by means of the instrument TA.XT-plusC TEXTURE ANALYSER of the firm Stable Micro System, equipped with a measurement probe comprising an extrusion cylinder having a 25 mm diameter, on whose bottom there are three equidistant extrusion holes, and a piston having a 23 mm diameter, which can slide in the extrusion cylinder.

In particular, the extrusion force was measured by applying a piston sliding speed equal to 1 mm/sec on a stroke of 5 mm.

More in particular, said cylinder has on the side walls, at the bottom, three extrusion holes reciprocally placed at a distance of 120 degrees and having an average diameter equal to 8.34 mm, i.e. an average diameter equal to about 8.34 mm.

Even more in particular, the extrusion force of the above-mentioned dough was measured carrying out the following procedure:
- a dough sample is placed into the above-mentioned extrusion cylinder;
- once the piston has been inserted into the extrusion cylinder and brought into contact with the dough, it is operated, thereby compressing the dough, until the latter is extruded through the three above-mentioned extrusion holes;
- measuring the extrusion force exerted on the dough sample.

Advantageously, the dough having the indicated texture values has mechanical features, in terms of ductility and elasticity, that are ideal for carrying out the lamination step a) and the forming step c).

According to a preferred embodiment of the present invention, during the above-mentioned step a), a first dough and a second dough are laminated.

In particular, the second dough has a different composition than the first dough.

Preferably, the second dough comprises cocoa.

More in particular, the first dough may comprise as ingredients yeast, sugar, flour, water, whole egg, yogurt, vegetable oils and/or fats and/or fractions thereof and/or butter; and the second dough may comprise as ingredients yeast, sugar, flour, water, cocoa, whole egg, yogurt, vegetable oils and/or fats and/or fractions thereof and/or butter.

Possibly, said first dough and/or said second dough may also comprise mono- and diglycerides of fatty acids and/or salt.

Preferably, for both said first dough and said second dough, the yeast is sourdough starter and/or brewer's yeast, more preferably brewer's yeast.

In an equally preferred manner, for both said first dough and said second dough, said flour is soft wheat flour or soft wheat flour mixed with multigrain flour.

In particular, said second dough comprising cocoa contributes to obtain a wave-shaped side decoration; in fact, as will be observed below and in relation to a specific embodiment of the present process, the sheet of dough thus formed, subjected to compaction, leavening and baking, is later cut longitudinally and transversely, so as to obtain a snack as single portions.

Hereby, as shown in the figures, the snack as a single portion has, besides the above-mentioned upper surface and an opposite lower surface, on which it lies, two side faces, which are opposite and extended along the length of the bakery product.

Said side faces, extended along the length of the product, have a wave-shaped side decoration, according to which - thanks to the second dough comprising cocoa and having a typical brownish color - one can see the folding the dough went through during the forming step c).

According to a particular embodiment, wherein the first dough and the second dough are first individually subjected to a preliminary lamination step, thereby obtaining a sheet of the first dough and a sheet of the second dough, and wherein subsequently a preliminary forming step is carried out, thereby obtaining a multilayer stack of sheets of dough, wherein a layer of the second dough is sandwiched between two layers of the first dough.

Said multilayer stack of sheets of dough is then subjected to the subsequent lamination step b) and following steps.

Optionally, the present process, between the leavening step e) and the baking step f), may comprise an intermediate covering step, wherein the leavened sheet of dough is covered with at least one layer of icing, preferably icing containing cocoa and hazelnuts.

Preferably, when the icing is applied, it has a viscosity between 3400 mPa·s (3400 cP) and 3900 mPa·s (3900 cP), more preferably between 3700 mPa·s (3700 cP) and 3800 mPa·s (3800 cP), measured at 25°C, using a controlled-stress rheometer model MCR101-ANTON PAAR, set at a rotational speed increasing from 2 sec⁻¹ to 50 sec⁻¹ in a time interval of 5 minutes.

In particular, the rheometer is a rotational viscometer comprising a cylindrical rotating element having a conical bottom, more in particular a rotor CC27/T200 Part. No. 79025 with diameter of 26.664 mm.

Even more in particular, the viscosity of the icing was measured carrying out the following procedure:
- an icing sample is placed into a cylindrical container having a diameter of 28.932 mm and the above-mentioned rotor is immersed therein;
- the rotor is operated, according to the above-mentioned speed setting in a time interval of 5 minutes;
- during the time interval of 5 minutes, the shear stress to which the icing sample is subjected is measured;
- the viscosity of the icing is calculated by means of interpolation of the recorded values of speed and shear stress using the Casson's formula.

Advantageously, using an icing having the indicated values of viscosity, it is possible to measure out it homogeneously onto the surface of the product, thereby obtaining a leavened sheet of dough covered with a layer of icing without uncovered areas.

Preferably, the above-mentioned optional step g) of horizontally cutting and filling may comprise the following sub-steps:
- carrying out a horizontal cut of the baked sheet of dough at or below the half of its thickness or height so as to obtain a first layer of baked sheet of dough and a second layer of baked sheet of dough;
- depositing a filling cream onto the upper surface of said first layer of baked sheet of dough, thereby obtaining a first layer of baked sheet of dough covered with a filling layer;
- coupling the first layer of baked sheet of dough to the second layer of baked sheet of dough, placing the second layer of baked sheet of dough onto the filling layer thereby deposited.

Preferably, said horizontal cut is carried out at a level between 1/5 and 4/5, more preferably between 2/5 and 3/5, of the thickness or height of the product.

Preferably, the filling cream comprises milk, cocoa butter, cocoa, sugar and barley malt.

Preferably, before carrying out the step g) of horizontally cutting and filling, the filling cream is subjected to a step of pasteurization at a temperature between 85-100°C for 2-10 minutes, followed by a cooling step wherein the filling cream is cooled until it reaches a temperature between 18-25°C.

Advantageously, the filling cream is thereby made microbiologically safe and stable.

Moreover, the filling cream has temperature and texture parameters suitable for its application during the following step g).

Preferably, the leavening step e) is carried out under controlled conditions of temperature and moisture for a time period between 1 hour and 7 hours, more preferably between 2 hours and 5 hours, at a temperature between 25°C and 50°C, more preferably between 30°C and 40°C, and under moisture conditions having a value between 70% and 90%.

Preferably, the above-mentioned filling cream has a viscosity between 1900 mPa·s (1900 cP) and 3200 mPa·s (3200 cP), more preferably between 1960 mPa·s (1960 cP) and 3140 mPa·s (3140 cP), measured at 20°C, using a controlled-stress rheometer model MCR101-ANTON PAAR, set at a rotational speed increasing from 2 sec⁻¹ to 50 sec⁻¹ in a time interval of 5 minutes.

In particular, the rheometer is a comprehensive rotational viscometer comprising a cylindrical rotating element having a conical bottom, more in particular a rotor CC27/T200 Part. No. 79025 with diameter of 26.664 mm.

Even more in particular, the viscosity of the filling cream was measured carrying out the following procedure:
- a sample of filling cream is placed into a cylindrical container having a diameter of 28.932 and the above-mentioned rotor is immersed therein;
- the rotor is operated, according to the above-mentioned speed setting in a time interval of 5 minutes;
- during the time interval of 5 minutes, the shear stress to which the sample of filling cream is subjected is measured;
- the viscosity of the filling cream is calculated by means of interpolation of the recorded values of speed and shear stress using the Casson's formula.

Advantageously, by monitoring said rheological parameter both during the step g) of horizontally cutting and filling and during the step h) of obtaining single portions, the possibility that the filling cream comes out of the sides of the product is minimized.

Moreover, thanks to the above-mentioned viscosity value, during the coupling sub-step, the second layer of baked sheet of dough optimally adheres to the underlying first layer of baked sheet of dough.

In a preferred embodiment, steps a) to h) of the present process are carried out in continuous.

According to an alternative embodiment, steps a) to d) of the present process are carried out in continuous and steps e) to h) are carried out in discontinuous.

Preferably, after the step h) of obtaining single portions, the present process may comprise the following further steps:
i) optionally, applying a flavoring solution onto the surface of the bakery product before packaging it into single portions, and
l) packaging the bakery product as single portions into packages suitable for food use.

In particular, in the application step i), the flavoring solution is an aroma in alcoholic solution.

More in particular, during the application step i), the aroma in alcoholic solution may be sprayed or dripped onto the surface of the bakery product as a single portion.

The present invention also refers to a packaged shelf-stable soft-dough bakery product obtainable by the process according to the present invention, wherein the packaged bakery product comprises a baked dough which has a mechanical tensile strength, expressed as the maximum deformation stress, between 1.45 N and 2.40 N, preferably between 1.57 N and 2.26 N, calculated at a temperature between 35°C and 40°C and measured using the instrument TA.XT-plusC TEXTURE ANALYSER of the firm Stable Micro System, equipped with a measurement probe of the A/PT type, wherein said shelf-stable soft-dough bakery product has an upper surface and an opposite lower surface, said upper surface having a regular pattern with alternating ridges and depressions.

In particular, the above-mentioned measurement probe comprises an extensible mechanical traction arm, which is set to a traction speed of 1 mm/sec during the measurement of the mechanical tensile strength.

More in particular, the extensible mechanical traction arm comprises an upper plate and a lower plate, each provided with tips adapted to pierce the product, wherein the upper plate is movable and is connected to the load cell and the lower plate is fixed.

Even more in particular, the mechanical tensile strength was measured carrying out the following procedure:
- anchoring the bakery product of the present invention, arranged along its length, to the extensible mechanical traction arm, by piercing it, along its width, by means of the above-mentioned tips and at the two opposite ends of the bakery product;
- moving the upper plate according to the above-mentioned traction speed, gradually moving it away from the lower plate;
- when a separation of the two opposite ends of the bakery product occurs, measuring the applied traction force.

Advantageously, said method allows to measure the traction force (measurement of the ultimate tensile strenght) which is proportional to the mechanical tensile strength of the sample.

In particular, the packaged shelf-stable bakery product is a soft-dough bakery product, wherein the baked dough is made of the above-mentioned baked sheet of dough obtained during the baking step f) of the process, and, thanks to a regular alternation of ridges and depressions in its upper surface, as well as thanks to the typical inner features of the baked dough, which are caused by both the folding carried out during the forming step c) and by the processing carried out during the following steps of the process, the product of the invention can be easily divided into parts by applying a little pressure with the fingers and without using cutting tools, and wherein the break lines, thereby formed from the above-mentioned depressions on its upper surface, are clear and well-defined along the thickness or height of the product.

Moreover, as will be noted later in relation to the detailed description and the examples, besides said specific mechanical strength, the bakery product of the invention also has special organoleptic properties and texture properties, and it gets perfectly soaked.

In a preferred embodiment, the packaged bakery product according to the present invention can be obtained from a first dough and a second dough arranged on several layers, wherein a layer of the second dough is sandwiched between two layers of the first dough.

The packaged bakery product according to the invention may further comprise a filling cream, the filling cream preferably comprising milk, cocoa butter, cocoa, sugar and barley malt.

According to the present invention, the expression "shelf-stable"" means a packaged bakery product that has a long shelf life at room temperature equal to at least 2 months, more preferably equal to at least 3 months.

Ultimately, the packaged bakery product obtained according to the present invention may be savored during breakfast or also as nibble during breaks of the day, wherein said product can be easily divided into parts to be soaked or shared with other tablemates or to be eaten in small bites.

Moreover, said packaged bakery product is in particular suitable as a snack for young children, also in this case thanks to the capability to be easily divided into parts.

### Brief description of the drawings

Figures 1a and 1b show a schematic representation of the plant, which is capable of operating in continuous downstream from the means designed for performing the leavening step (Figure 1a) or in discontinuous downstream from the means designed for performing the leavening step (Figure 1b), respectively, by which the process according to the present invention can be carried out, in particular the retractable deposition means are shown in resting position.
Figures 2a and 2b show a schematic representation of the plant, which is capable of operating in continuous downstream from the means designed for performing the leavening step (Figure 2a) or in discontinuous downstream from the means designed for performing the leavening step (Figure 2b), respectively, by which the process according to the present invention can be carried out, in particular the retractable deposition means are shown in end-stroke position.
Figure 3 shows a station of production of a stack of dough in which two types of sheets of dough overlap.
Figure 4 shows a schematic representation of the noteworthy steps of the process of the present invention.
Figure 5 shows a schematic representation of the steps of production according to a preferred embodiment of the process of the present invention.
Figure 6 schematically depicts a stack of sheets of dough of five layers of dough, wherein one layer of the second dough is sandwiched between two layers of the first dough.
Figure 7 shows a photograph of the depositing conveyor belt loaded with a laminated sheet of dough and a receiving conveyor belt onto which the sheet of dough was deposited during the process of the invention according to the steps carried out in Example 1 described below.
Figure 8 shows a photograph of the bakery product obtained at the end of Example 1 described below.
Figure 9 shows a photograph of the obtained bakery product, which has been already shown in Figure 8, after being divided into two parts.

### Detailed description

In one aspect, the present invention relates to a process for preparing a packaged shelf-stable bakery product that can be divided into parts.

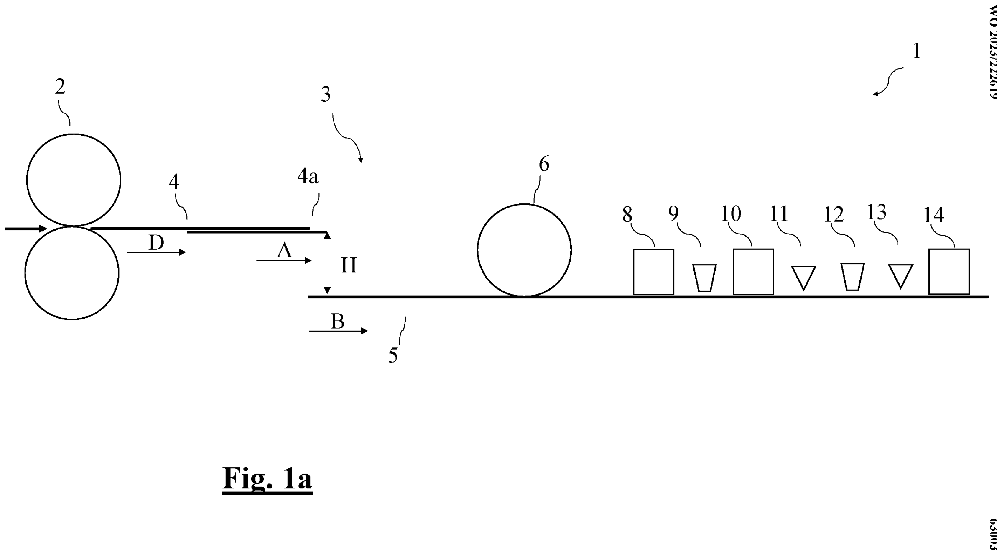

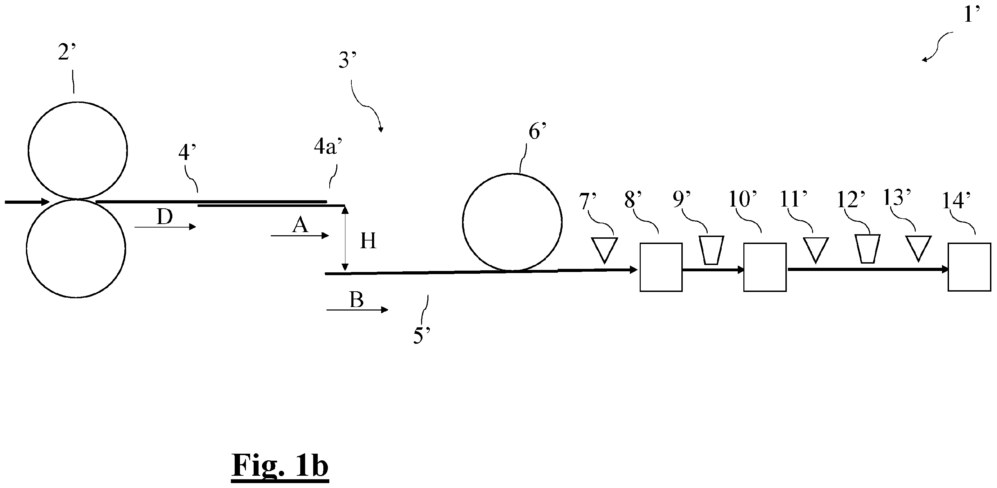

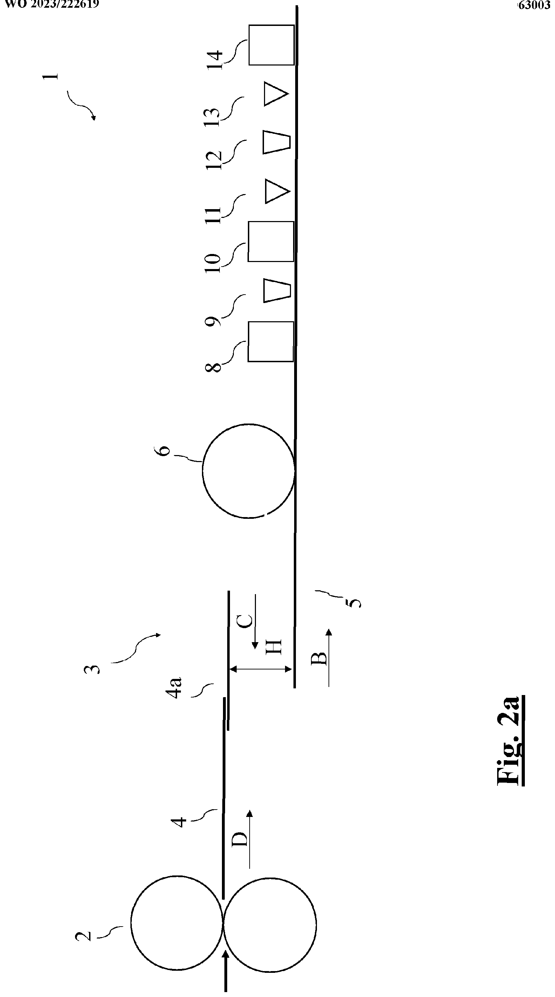

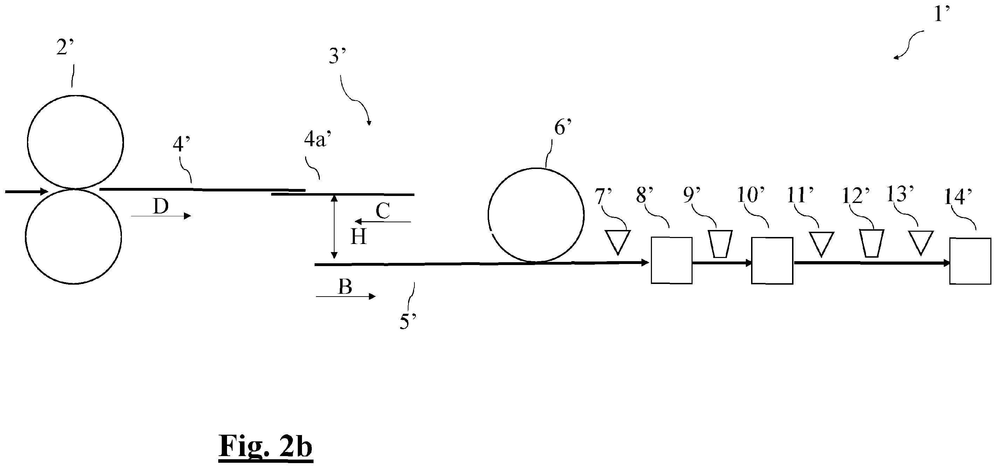

Later on in the description, terms such as above, under, lower, upper, or derivatives thereof are to be meant with reference to the normal configuration of use of the plant 1, 1' illustrated in figures 1a, 1b, 2a and 2b.

Figures 1a, 1b, 2a and 2b show the noteworthy parts of the plant 1, 1' used in the present process. The plant 1, 1' comprises a forming unit 3, 3' and a lamination station 2, 2', in particular comprising lamination machinery such as a stretcher and a multi-roller satellite system.

The forming unit 3, 3' comprises a depositing conveyor belt 4, 4' which is adapted to allow the dough to slide in direction D.

The cylindrical rollers of the multi-roller satellite system of the lamination station 2, 2' are arranged upstream and, in their length, perpendicularly with respect to the depositing conveyor belt 4, 4'.

Totally conventionally, the cylindrical rollers of the multi-roller satellite system are arranged one above the other, with horizontal axes, parallel to each other, and are adapted to rotate according to the same direction of rotation and are placed at a distance suitable to obtain, after the dough has passed between them, a laminated sheet of dough having a desired thickness.

Moreover, the lamination station 2 and 2' in turn further comprises specific transport belts which are then connected with the depositing conveyor belt 4, 4'.

The depositing conveyor belt 4, 4' comprises retractable deposition means 4a, 4a', i.e. a movable retractable system, which is placed at its downstream end and is adapted to travel a stroke of predetermined length, in the present case equal to 45 mm.

The movable retractable system 4a, 4a' is adapted to advance and retract, according to time cycles of preset duration, along a sliding path of a preset length, wherein, during the movement of advancement and retraction of the movable retractable system, the depositing conveyor belt 4, 4' extends and retracts, respectively.

As shown in Figures 1a, 1b, 2a and 2b, the movable retractable system 4a, 4a' advances in direction A, (in figures 1a and 1b the movable retractable system 4a, 4a' is in resting position) and retracts in direction C (in figures 2a and 2b the movable retractable system 4a, 4a' is in end-stroke position).

Under the depositing conveyor belt 4, 4', in this case at a vertical distance H of 150 mm, there is a receiving conveyor belt 5, 5' that advances in direction B, which is identical to direction D of advancement of the depositing conveyor belt 4, 4'. The receiving conveyor belt 5, 5' is positioned consecutively to and downstream from the depositing conveyor belt 4, 4'.

The retractable nose 4a, 4a' may be arranged parallel to or at a predetermined angle of inclination with respect to the underlying receiving conveyor belt 5, 5'.

According to a preferred embodiment, even though not shown, the retractable nose 4a, 4a' has an angle of inclination with respect to the underlying receiving conveyor belt 5, 5' between 0° and 60°, more preferably between 5° and 40°.

It is understood that, when the retractable nose 4a, 4a' is in end-stroke position, it is above the receiving conveyor belt 5, 5'.

After that, a compaction station 6, 6' is installed, i.e. a cylindrical compaction roller, which is arranged perpendicular to the receiving conveyor belt 5, 5'.

According to a first embodiment, which is shown in Figures 1a and 2a, the plant 1 comprises, according to a production path from upstream to downstream, a leavening system 8, a delivery dosing unit 9 for an icing and a baking oven 10.

Downstream from the baking oven 10, a cooling unit, not shown, may be installed.

A cutting station 11 follows, wherein the portions of baked sheet of dough undergo a horizontal cut, so that a first layer of baked sheet of dough and a second layer of baked sheet of dough are provided.

Downstream from the first cutting station 11 there is a filling unit 12 adapted to provide and deliver a filling cream onto the upper surface of the first layer of baked sheet of dough.

Downstream from the filling unit 12, coupling means are installed, which are not shown, that are adapted to couple the first layer of baked sheet of dough to the second layer of baked sheet of dough, placing the second layer of baked sheet of dough onto the filling layer thereby deposited.

The second cutting station 13, placed downstream from the filling unit 12, is adapted to carry out a longitudinal cut along the length of the portions of baked sheet of dough, so as to obtain loaves of sheet of dough, which are subsequently cut transversely with respect to the length of the loaves of sheet of dough thereby provided, so as to provide single portions of bakery product.

Finally, downstream from the units shown in figure 1, the system comprises a packaging station 14.

In an alternative embodiment, a plant 1' comprises, downstream from a compaction station 6', a cutting station 7', in which the compacted sheet of dough is transversely cut with respect to its length, thereby obtaining segments of compacted sheet of dough.

Downstream from the cutting station 7', the system can thus operate in discontinuous.

Downstream from the cutting station 7', there is a leavening system 8'.

The plant 1' further comprises, upstream of the compaction system 6' and downstream from the cutting station 7', stations and systems that are identical to the ones previously mentioned (and are indicated, in Figures 1b and 2b, with reference numbers that are analogous to those used above for the stations and systems of the plant 1).

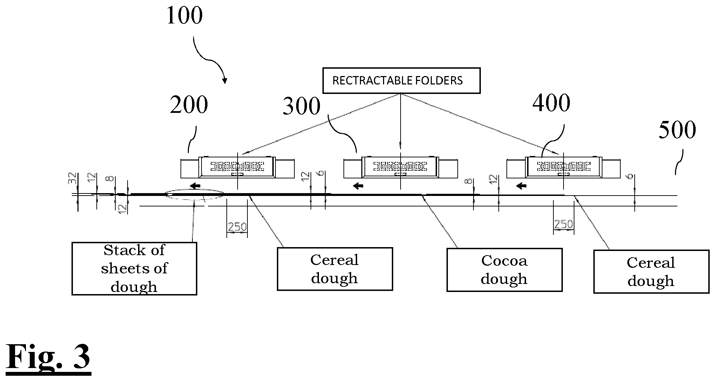

Figure 3 shows a station for the production of a stack of dough 100 that, according to a mode of carrying out the process of the invention, may be comprised in the plant 1, 1' and installed upstream of the lamination station 2, 2'.

As illustrated, the station for the production of a stack of dough 100 comprises three folders 200, 300 and 400, adapted to deposit and fold, according to an oscillating movement, at least one dough onto an underlying conveyor belt 500, thereby obtaining a stack of sheet of dough.

In particular, said folders are arranged alternately and in series one after the other and are positioned transversely with respect to the underlying conveyor belt 500.

As will be observed below with reference to the procedure of Example 1, the first folder 200 and the third folder 400 are adapted to deposit a first dough onto the underlying conveyor belt 500, whereas the second folder 300 is adapted to deposit a second dough onto the underlying conveyor belt 500.

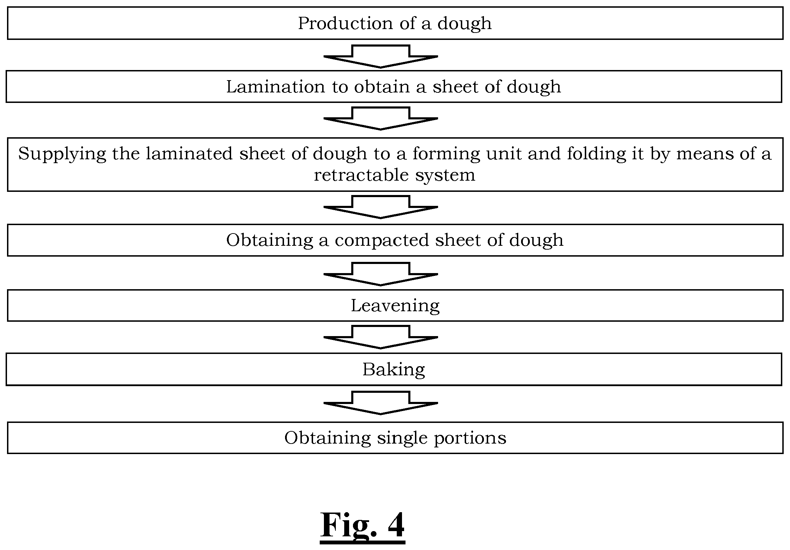

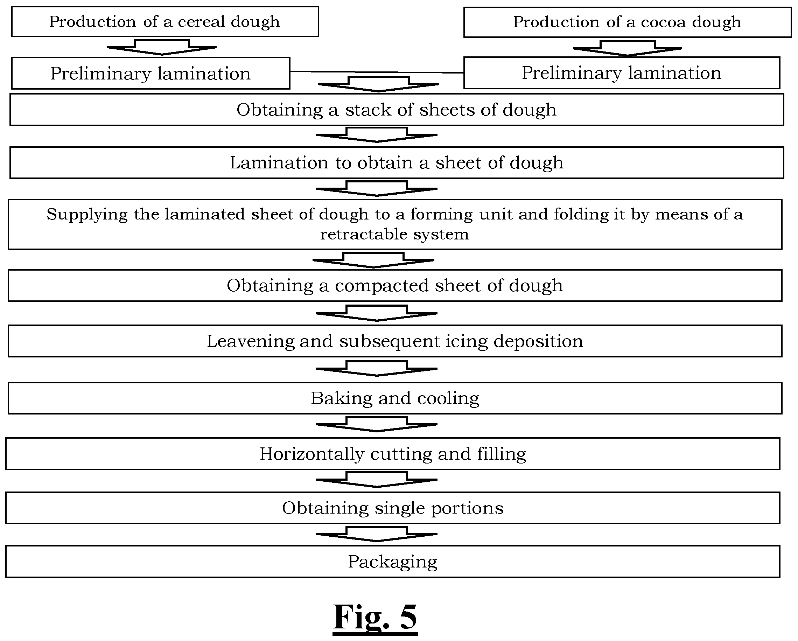

Figure 4 shows the noteworthy steps of the process for obtaining the packaged bakery product according to the invention and figure 5 shows the steps of a preferred embodiment of the process according to the present invention, as will be described in detail below with reference to Example 1, wherein, after the compaction step, the subsequent operations until obtaining the bakery product as single portions are carried out in continuous.

According to a particular embodiment of the process of the invention, as previously mentioned in the summary, first of all, a first dough is prepared, which comprises the ingredients that are indicated, in percentage by weight of its total weight, in the following Table 1.

**Table 1: Ingredients, in percentage by weight, that are in the first dough**

| *Ingredients* | *%* |
|---|---|
| Yeast | 3-7 |
| Sugar | 4-10 |
| Flour | 30-55 |
| Cocoa | 0-2 |
| Water | 15-20 |
| Whole egg | 4-8 |
| Yogurt | 1-5 |
| Sunflower oil | 5-10 |
| Butter | 0-3 |
| Mono- and diglycerides of fatty acids | 0-4 |
| Salt | 0-1 |
| Aromas | 0-0.5 |

The packaged bakery product may comprise also a second dough comprising the ingredients that are indicated, in percentage by weight of its total weight, in the following Table 2.

**Table 2: Ingredients, in percentage by weight, that are in the second dough**

| *Ingredients* | *%* |
|---|---|
| Yeast | 3-7 |
| Sugar | 4-9 |
| Flour | 30-50 |
| Cocoa | 4-12 |
| Water | 20-25 |
| Whole egg | 2-6 |
| Yogurt | 1-5 |
| Sunflower oil | 4-8 |
| Butter | 0-3 |
| Mono- and diglycerides of fatty acids | 0-4 |
| Salt | 0-2 |
| Aromas | 0-0.5 |

In particular, as previously mentioned in the summary, for both said first dough and for said second dough, the yeast may be sourdough starter and/or brewer's yeast.

Moreover, for both said first dough and said second dough, said flour may be soft wheat flour or soft wheat flour mixed with multigrain flour.

Specifically, for both said first dough and for said second dough, said multigrain flour may comprise seeds or derivatives thereof, such as flours or cereals in flakes, selected from the group comprising durum wheat, soft wheat, turanicum wheat (*Triticum turgidum* ssp. Turanicum), rice, rye, corn, rice, spelt, barley, sorghum, millet, oat, triticale or buckwheat.

In particular, said first dough and/or said second dough may comprise vegetable oils and/or fats and/or fractions thereof, butter or any mixture of vegetable oils and/or fats and/or fractions thereof and butter.

More in particular, for both said first dough and for said second dough, said vegetable oils and/or fats and/or fractions thereof are selected from the group consisting of palm oil, olive oil, sunflower oil, rapeseed oil, soy oil, corn oil and any combination thereof.

More in particular, said vegetable oils and/or fats and/or fractions thereof are sunflower oil.

Again, in a preferred embodiment, the packaged bakery product may comprise an icing, which generally comprises the ingredients that are indicated, in percentage by weight of its total weight, in the following Table 3.

**Table 3: Ingredients, in percentage by weight, that are in the icing**

| *Ingredients* | *%* |
|---|---|
| Wheat flour | 20-40 |
| Cocoa 20/22 | 1-10 |
| Caster sugar | 10-20 |
| Hazelnut paste | 10-18 |
| Butter | 1-10 |
| Eggs | 10-15 |
| Water | 15-25 |

Finally, the packaged bakery product may comprise a filling cream which, in a preferred embodiment, is a barley malt cream generally comprising the ingredients that are indicated, in percentage by weight of its total weight, in the following Table 4.

**Table 4: Ingredients, in percentage by weight, that are in the filling cream.**

| *Ingredients* | *%* |
|---|---|
| Water | 3-8 |
| Milk | 15-25 |
| Glucose syrup | 15-30 |
| Cocoa butter | 15-25 |
| Caster sugar | 15-35 |
| Cocoa powder | 3-5 |
| Salt | 0-1 |
| Barley malt extract | 1-3 |
| Aromas | 0-0.5 |

### Example 1

According to a preferred embodiment, two doughs were prepared, a first dough that can be defined as a cereal dough and a second dough that can be referred to as cocoa dough.

The cereal dough has the following ingredients with the amounts that are indicated in Table 5 as percentage by weight of its total weight:

**Table 5: Ingredients that are in the cereal dough, wherein the multigrain flour comprises a mixture of spelt flakes, barley flakes, rice flakes, rye flakes, rolled oats, decorticated buckwheat, durum wheat.**

| *Ingredients* | *%* |
|---|---|
| Sourdough starter | 3.0 |
| Cream yeast | 1.9 |
| Glutathione | 0.14 |
| Caster sugar | 8.3 |
| Seven-grain flour | 2.9 |
| Wheat flour | 48.9 |
| Enzymatic improver | 0.39 |
| Cocoa | 0.4 |
| Aroma | 0.20 |
| Water | 17 |
| Whole egg | 6.3 |
| Yogurt | 1.6 |
| Sunflower oil | 7.0 |
| Butter | 0.6 |
| Mono- and diglycerides of fatty acids | 0.9 |
| Salt | 0.3 |
| Vanillin | 0.02 |
| Aromas | 0.15 |
| *Total of the first dough* | *100* |

The cocoa dough has the following ingredients with the amounts that are indicated in Table 6 as percentage by weight of its total weight:

**Table 6: Ingredients that are in the cocoa dough, wherein the seven-grain flour is a mixture of spelt flakes, barley flakes, rice flakes, rye flakes, rolled oats, decorticated buckwheat, durum wheat.**

| *Ingredients* | *%* |
|---|---|
| Sourdough starter | 2.5 |
| Natural yeast | 1.6 |
| Glutathione | 0.11 |
| Caster sugar | 7.0 |
| Seven-grain flour | 2.4 |
| Wheat flour | 41 |
| Enzymatic improver | 0.3 |
| Cocoa | 7.8 |
| Aroma | 0.17 |
| Water | 22.2 |
| Whole egg | 5.3 |
| Yogurt | 1.2 |
| Sunflower oil | 6.5 |
| Butter | 0.6 |
| Mono- and diglycerides of fatty acids | 1 |
| Salt | 0.2 |
| Vanillin | 0.02 |
| Aromas | 0.1 |
| *Total of the second dough* | *100* |

The ingredients of the respective doughs were separately mixed until a homogeneous dough was obtained for each by means of a spiral mixer provided with a rotating tank and two spiral hooks which rotate to mix the ingredients, assisted by the rotational movement of the tank.

In particular, the step of kneading the cereal dough was carried out by a procedure comprising the following sub-steps:
- caster sugar, seven-grain flour, wheat flour, cocoa, salt, vanillin and glutathione were mixed with water at low speed for 360 seconds and at high speed for 280 seconds.
- the remaining ingredients were added to said mixture by mixing at high speed for 270 seconds.
- the mixture thereby obtained was cooled down to a temperature of about 18°C, by adding powdered dry ice i.e. solid carbon dioxide (at the temperature of about -78°C) into the dough by low-speed mixing for 300 seconds;
- finally, the mixer was operated again at high speed for 90 seconds.

Specifically, cooling is carried out to control the temperature increase due to the friction forces that generate during the mixing process.

The cocoa dough was obtained by a procedure that is similar to the one for obtaining the cereal dough and that comprises the following sub-steps:
- caster sugar, seven-grain flour, wheat flour, cocoa, salt, vanillin were mixed with water at low speed for 360 seconds and at high speed for 330 seconds;
- the remaining ingredients were added to said mixture by mixing at high speed for 270 seconds;
- the mixture thereby obtained was cooled down to a temperature of about 19°C, by adding powdered solid carbon dioxide into the dough by low-speed mixing for 300 seconds;
- finally, the mixer was operated again at high speed for 90 seconds.

Afterward, the texture for each dough was measured at the temperature of 18°C using the instrument TA.XT-plusC TEXTURE ANALYSER of the firm Stable Micro System, according to the procedure that was previously explained with reference to the summary, wherein the cereal dough had a texture of 39.85 N and the chocolate dough had a texture of 42.45 N.

Afterward, the cereal dough was extruded in a continuous layer onto a conveyor belt until a thickness of 40 mm and a width of 400 mm were reached, and it was supplied to a lamination plant, comprising stretcher machines and a multi-roller satellite system, thereby reducing the dough's thickness down to 6 mm.

At the same time, the cocoa dough was also extruded in a continuous layer onto a conveyor belt until a thickness of 40 mm and a width of 600 mm were reached, and it was supplied to a lamination plant, comprising stretcher machines and a multi-roller satellite system, thereby reducing the dough's thickness down to 8 mm.

Subsequently, the laminated cereal dough was cut and divided into two segments of laminated cereal dough and, together with the laminated cocoa dough, was supplied into the station of production of a stack of dough 100 (Figure 3). The two segments of cereal dough and the laminated cocoa dough were transported onto three different folders, the folder or folding conveyor belts 200 and 400 for the segments of cereal dough and the folding belt 300 for the laminated cocoa dough.

By means of the folder 200, the first segment of cereal dough is deposited onto the underlying conveyor belt 500, folding it into two folds.

Subsequently, by means of the second folding conveyor belt 300, the laminated cocoa dough was deposited onto the first segment of cereal dough.

Finally, by means of the third folder belt 400, the second segment of cereal dough was laid onto the cocoa dough, folding the second segment of cereal dough into two folds.

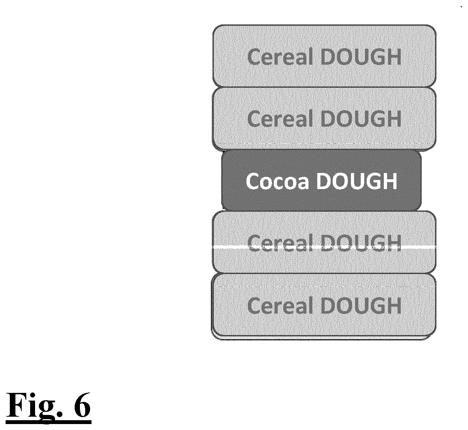

Hereby, a stack of sheets of dough that had a thickness of 32 mm and was formed by the coupling of three layers of dough was obtained, in which the cocoa dough was sandwiched between the layers of the cereal dough, as shown in figure 6.

Afterward, the stack of sheets of dough was subjected to a lamination step inside the lamination station 2, so as to obtain a laminated sheet of dough with a thickness of 2 mm, which is functional for carrying out the subsequent forming step.

At this point, the laminated sheet of dough was supplied to a forming unit 3, reaching a depositing conveyor belt 4 having a speed of about 4 m/min, provided with a movable retractable system 4a; the latter allowed to deposit the sheet of dough onto the receiving conveyor belt 5 during the forming step.

In particular, during the forming step, the movement of advancement and retraction of the retractable system 4a allowed to deposit the sheet of dough coming from the depositing conveyor belt 4, folding it over itself twice and thus obtaining a total number of three layers of dough.

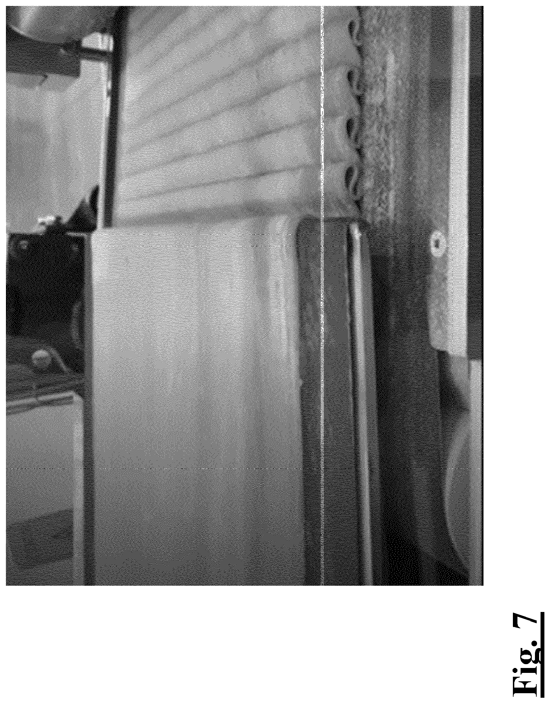

A plurality of folds, which are separate and distinct from each other, were formed and the upper surface of the sheet of dough so folded had a regular pattern with alternating ridges and depressions, thus obtaining a shape similar to a wave, as shown in figure 7.

The receiving conveyor belt 5 had a speed of advancement equal to 1/3 of the speed of advancement of the depositing conveyor belt, in particular the speed of the receiving conveyor belt was 1.3 m/min.

The retraction movement of the retractable system 4a had a duration equal to 20% of the total duration of the time cycle of the movement of retraction and advancement of the retractable system.

Therefore, a sheet of dough having a plurality of folds that were separate and distinct from each other was obtained, wherein the depressions were 22 mm apart from each other; the total thickness of the sheet of dough at the ridges was 7.5 mm.

During said forming step, as could be expected, air was incorporated between the folds, thus creating hollow spaces that may compromise the following steps of the process and therefore the end product.

Inside the subsequent compaction station 6, in which a roller system operated, a compaction step was then carried out that allowed to compress the hollow spaces and thus to remove at least a part of the air trapped therein, thereby obtaining a compacted sheet of dough with 5.8 mm thickness.

Subsequently, the compacted folded sheet of dough, having a regular pattern with alternating ridges and depressions that resembles the form of a wave, was supplied into a leavening station 8, in particular a continuous-belt leavening system.

The leavening step was carried out at a temperature of 30°C for a time period of 3 hours and at a moisture value of 85%.

Afterward, the leavened sheet of dough was iced on the upper part inside an icing station 9, in particular by means of an stripe-icing system in which there is an administering system that allows to administer the icing to be deposited through nozzles, which are fed by extruding rollers and have a diameter of 26 mm, a thickness of 1.1 mm and a center-to-center distance of 40 mm.

The used icing was produced according to a recipe comprising the ingredients indicated in the following Table 7.

**Table 7: Ingredients in percentage by weight of the total weight of the cocoa icing.**

| *Ingredients* | *%* |
|---|---|
| Wheat flour | 29.90 |
| Cocoa 20/22 | 3.99 |
| Caster sugar | 13.29 |
| Hazelnut paste | 12.62 |
| Butter | 5.98 |
| Eggs | 12.62 |
| Water | 21.60 |
| *Total of the icing* | *100* |

The icing was prepared by means of a shield planetary mixer, in a two-step process, wherein wheat flour, cocoa and caster sugar were mixed for one minute in a low-speed mode, and afterward the latter ingredients were mixed with hazelnut paste, butter, eggs and water for 7 minutes in an intermediate-speed mode.

The icing thereby obtained had a viscosity of 3750 mPa·s (3750 cP), measured at 25°C by means of a controlled-stress rheometer model MCR101-ANTON PAAR, according to the procedure that was previously explained with reference to the summary.

The icing thereby obtained was transferred into the fixed-head administering system provided with a hopper to ice the leavened sheet of dough. The nozzles of the administering system deposited the icing onto the two outer sides of the leavened sheet of dough, thereby creating stripes of icing with a width of about 20 mm and a center-to-center distance of about 38 mm.

The compacted and leavened sheet of dough that was covered in this way with a layer of icing was then baked in an oven 10, in particular in a steel baking band oven, for 15 minutes and at 185°C.

Subsequently, the baked sheet of dough was cooled to 25°C by means of a belt-equipped cooling plant for about 30 minutes, until it has reached room temperature, i. e. a temperature between 18-22°C.

Subsequently, the baked sheet of dough was horizontally cut by means of cutting means, inside the first cutting station 11, approximately at the half of its height, thus forming a first lower layer and a second upper layer. The second upper layer was transported by a conveyor belt on a raised path, and the first lower layer, which is also transported by means of a conveyor belt, was instead subjected to a filling step inside a filling station 12.

The filling cream was a barley malt cream, which was produced according to a recipe comprising the ingredients indicated below in Table 8.

**Table 8: Ingredients of the barley malt cream by weight of its total weight**

| *Ingredients* | *%* |
|---|---|
| Water | 4.7 |
| Milk | 19.8 |
| Glucose syrup | 22 |
| Cocoa butter | 19 |
| Rice starch | 1.0 |
| Inulin | 2.5 |
| Caster sugar | 25.6 |
| Cocoa powder | 2.5 |
| Salt | 0.3 |
| Barley malt extract | 1.0 |
| Corn starch | 1.5 |
| Aroma | 0.1 |
| *Total of the filling* | *100* |

The barley malt cream was obtained in a mixer, in which first water, milk, glucose syrup, and barley malt extract were mixed for 120 seconds at a temperature of 50°C; later, rice starch, inulin, caster sugar, cocoa powder, salt, corn starch, and aroma were added and then mixed into the previously obtained mixture for 180 seconds at 50°C. Finally, cocoa butter was added and the whole mixture was mixed for 300 seconds at 52°C.

The barley malt cream was first pasteurized at a temperature of 90°C for 3 minutes, so as to make it microbiologically safe and stable.

After the pasteurization process, the barley malt cream was cooled down before the subsequent filling step until it reached a temperature of 19°C. The obtained barley malt cream was characterized at the temperature of 20°C by means of a controlled-stress rheometer model MCR101-ANTON PAAR, according to the procedure that was previously explained with reference to the summary; the barley malt cream, ready for the following deposition, had a viscosity value of 2690 mPa·s (2690 cP).

By means of tubular nozzles, the barley malt cream was deposited onto the first lower layer.

Afterward, once the filling step had been finished, the first lower layer and the second upper layer were coupled again, so as to obtain a filled semifinished product comprising as components, in percentage by weight of its total weight:
- Cereal dough, 43%;
- Cocoa dough, 14%;
- Cocoa icing, 8%;
- Barley malt cream, 35%.

Afterward, the filled semifinished product was cut longitudinally by means of blades, which were installed inside the second cutting station 13, and was divided into rows according to a cutting direction placed at an equal distance between adjacent stripes.

Subsequently, by using an ultrasound cutter, which was also installed inside the second cutting station 13 and downstream from the above-mentioned blades, the filled sheet of dough, arranged into rows, was divided into single portions, that had the size of 100 x 40 x 33 mm (length x width x height).

The bakery product thereby obtained were characterized by a regular alternation of ridges and depressions in its upper surface; the surface of the product thereby obtained had four ridges and the depressions were 25 mm apart from each other.

Finally, the single-portion products were supplied to a packaging station 14, where they were hermetically packaged in packaging suitable for food conservation.

A packaged bakery product with a shelf life at room temperature of 3 months was thus obtained.

### Mechanical characterization of the bakery product

The bakery product was characterized to calculate its mechanical strength. Said parameter is very important, because it is related to the features of easy manual subdivision of the product according to well-defined break lines and, most importantly, it guarantees that, during the manual subdivision of the packaged bakery product, said product does not flake apart.

Said characterization was carried out by means of a tensile test suitable for measuring the maximum deformation stress of the above-mentioned bakery product, obtaining a value of 1.87 N, with sample temperature between 35°C and 40°C, and measured, according to the procedure that was previously explained with reference to the summary, by means of the instrument TA.XT-plusC TEXTURE ANALYSER of the firm Stable Micro System, equipped with a measurement probe of the A/PT type.

Thus, with the above-mentioned process was possible to obtain a packaged bakery product having a regular wave pattern, which allows to easily divide the bakery product without using cutting tools.

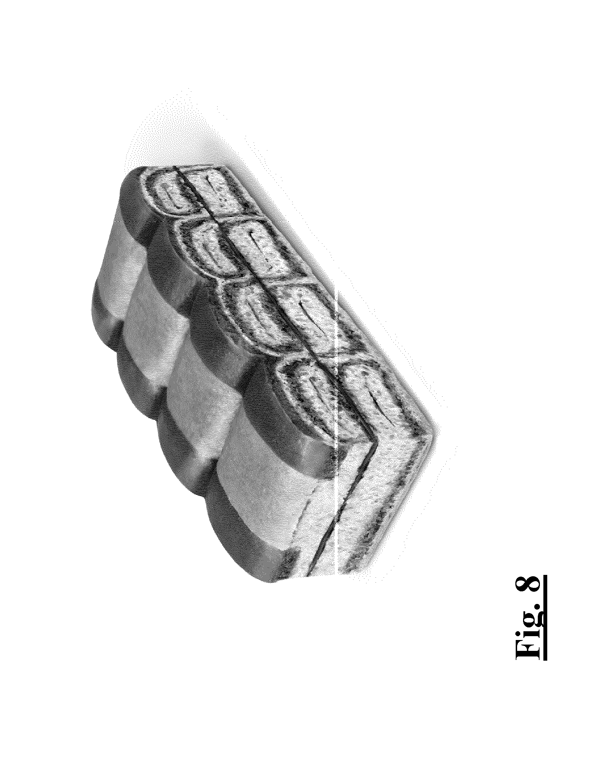

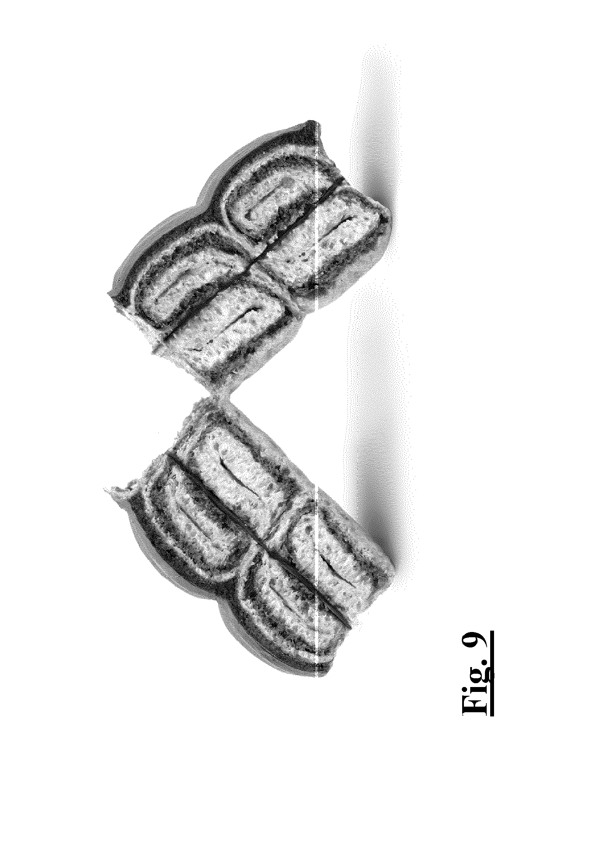

In particular, Figure 8 and Figure 9 should be observed, which show the bakery product obtained once the above-mentioned Example 1 was concluded, wherein in Figure 9 the product of the invention is shown divided into two portions by manually applying a little pressure in opposite direction on consecutive ridges: the product was split into two separate subunits, thereby forming a well-defined clear break line along the thickness of the product.

The bakery product had side decoration, which was obtained by overlaying the dough layers, wherein the cocoa dough, which was darker, in the center was sandwiched between layers of cereal dough, which were lighter.

Finally, it is to be noted that natural leavening allowed to obtain a bakery product with a soft dough, the latter characterized by an alveolar structure, thereby obtaining a product that was very soft and thus suitable for the soaking and dunking steps.

## Claims

1. A process for obtaining a packaged shelf-stable soft dough bakery product, possibly filled, comprising the following steps:
a) subjecting at least one dough to a lamination step, so as to obtain a laminated sheet of dough with a thickness between 1 mm and 5 mm;
b) supplying said laminated sheet of dough to a forming unit (3; 3'), wherein said forming unit (3; 3') comprises a depositing conveyor belt (4, 4') and a receiving conveyor belt (5, 5'), said depositing conveyor belt (4, 4') being provided with retractable deposition means (4a, 4a') adapted to perform a movement of advancement and retraction in relation to said receiving conveyor belt (5, 5') and to advance and retract along a sliding path of a preset length, wherein said depositing conveyor belt (4, 4') has a higher advancement speed compared to that of the receiving conveyor belt (5, 5');
c) by means of said retractable deposition means (4a, 4a') and during the movement of advancement and retraction of the latter, carrying out a forming step, by depositing said laminated sheet of dough from the depositing conveyor belt (4, 4') to the receiving conveyor belt (5, 5'), thereby obtaining a folded sheet of dough;
d) subjecting the folded sheet of dough thereby obtained to a compaction step, thereby obtaining a compacted sheet of dough;
e) subjecting the compacted sheet of dough to a leavening step under controlled conditions of temperature and moisture, thereby obtaining a leavened sheet of dough;
f) baking the leavened sheet of dough for a time period between 10 and 40 minutes, preferably between 15 and 25 minutes, and at a temperature between 160°C and 230°C, preferably between 180°C and 200°C, thereby obtaining a baked sheet of dough;
g) optionally, horizontally cutting said baked sheet of dough, thereby obtaining a first layer of baked sheet of dough and a second layer of baked sheet of dough, and providing a layer of filling cream between said first layer and said second layer of baked sheet of dough;
h) providing a packaged shelf-stable soft-dough bakery product as single portions, starting from said baked sheet of dough;
wherein the movement of advancement and retraction of the retractable deposition means (4a, 4a') occurs in a continuous way according to a time cycle with a preset duration;
wherein the retraction movement of the retractable deposition means (4a, 4a') has a duration between 10-40% with respect to the preset duration of the time cycle of the movement of advancement and retraction of the retractable deposition means (4a, 4a');
wherein said compacted sheet of dough obtained during the compaction step d) has a thickness between 4 mm and 22 mm; and,
wherein said packaged shelf-stable soft-dough bakery product has an upper surface and an opposite lower surface, said upper surface having a regular pattern with alternating ridges and depressions.

2. The process according to claim 1, wherein said laminated sheet of dough, obtained during the lamination step a), has a thickness between 1 mm and 3 mm, preferably equal to 2.5 mm.

3. The process according to claim 1 or 2, wherein the retraction movement of the retractable deposition means (4a, 4a') has a duration equal to 20% with respect to the preset duration of the time cycle of the movement of advancement and retraction of the retractable deposition means (4a, 4a').

4. The process according to any one of claims 1-3, wherein, during the forming step c), the laminated sheet of dough is folded over itself at least twice, preferably the laminated sheet of dough being folded over itself twice, more preferably the speed of advancement of the receiving conveyor belt (5, 5') being equal to at most 1/3 of the speed of advancement of the depositing conveyor belt (4, 4').

5. The process according to any one of claims 1-4, wherein, during the forming step c), the speed of advancement of the receiving conveyor belt (5, 5') is between 2 m/min and 15 m/min, preferably between 3 m/min and 9 m/min, more preferably between 3.5 m/min and 6.5 m/min.

6. The process according to any one of claims 1-5, wherein, during the forming step c), the depositing conveyor belt (4, 4') is positioned at a preset height with respect to the receiving conveyor belt (5, 5'), preferably said preset height being between 50 mm and 400 mm, more preferably between 100 mm and 150 mm.

7. The process according to any one of claims 1-6, wherein the length of the sliding path of said retractable deposition means (4a, 4a') is between 25 mm and 60 mm, preferably between 30 mm and 50 mm.

8. The process according to any one of claims 1-7, wherein said compacted sheet of dough obtained during the compaction step d) has a thickness between 5 mm and 15 mm.

9. The process according to any one of claims 1-8, wherein, during the lamination step a), a first dough and a second dough are laminated, the second dough preferably comprising cocoa.

10. The process according to claim 9, wherein said first dough and said second dough are first individually subjected to a preliminary lamination step, thereby obtaining a sheet of the first dough and a sheet of the second dough, and subsequently a preliminary forming step is carried out, thereby obtaining a multilayer stack of sheets of dough, a layer of the second dough being sandwiched between two layers of the first dough.

11. The process according to any one of claims 1-10, wherein the leavening step e) is carried out under controlled conditions of temperature and moisture for a time period between 1 hour and 7 hours, preferably between 2 hours and 5 hours, at a temperature between 25°C and 50°C, preferably between 30°C and 40°C, and under moisture conditions having a value between 70% and 90%.

12. The process according to any one of claims 1-11, wherein said step g) of horizontally cutting and filling comprises the following sub-steps:
- carrying out a horizontal cut of the baked sheet of dough at or below the half of its height so as to obtain a first layer of baked sheet of dough and a second layer of baked sheet of dough;
- depositing a filling cream onto the upper surface of said first layer of baked sheet of dough, thereby obtaining a first layer of baked sheet of dough covered with a filling layer;
- coupling the first layer of baked sheet of dough to the second layer of baked sheet of dough, placing the second layer of baked sheet of dough onto the filling layer thereby deposited.

13. The process according to any one of claims 1-12, wherein said horizontal cut is carried out at a level between 1/5 and 4/5, preferably between 2/5 and 3/5, of the height of the baked sheet of dough.

14. The process according to any one of claims 1-13, wherein said filling cream comprises milk, cocoa butter, cocoa, sugar and barley malt.

15. The process according to any one of claims 1-14, wherein said steps a) to h) are carried out in continuous.

16. A packaged shelf-stable soft-dough bakery product obtainable by the process according to any one of claims 1-15, comprising a baked dough which has a mechanical tensile strength between 1.45 N and 2.40 N, preferably between 1.57 N and 2.26 N, calculated at a sample temperature between 35°C and 40°C and measured using the instrument TA.XT-plusC TEXTURE ANALYSER of the firm Stable Micro System, equipped with a measurement probe of the A/PT type, wherein said shelf-stable soft-dough bakery product has an upper surface and an opposite lower surface, said upper surface having a regular pattern with alternating ridges and depressions.

## Patentansprüche

1. Verfahren zur Herstellung eines verpackten, lagerstabilen Backwarenprodukts, insbesondere eines Backwarenprodukts aus weichem Teig, das gegebenenfalls gefüllt ist, mit den folgenden Schritten:
a) Unterziehen mindestens eines Teiges einem Einziehschritt, um eine Ziehteigplatte mit einer Dicke zwischen 1 mm und 5 mm zu erhalten;
b) Zuführen der Ziehteigplatte zu einer Formgebungseinheit (3; 3'), wobei die Formgebungseinheit (3; 3') ein Ablegeförderband (4, 4') und ein Aufnahmeförderband (5, 5') umfasst, wobei das Ablegeförderband (4, 4') mit einziehbaren Ablegemitteln (4a, 4a') ausgestattet ist, die dazu ausgebildet sind, eine Vorwärts- und Rückwärtsbewegung in Bezug auf das Aufnahmeförderband (5, 5') auszuführen und sich entlang einer Gleitbahn mit einer voreingestellten Länge vorwärts und rückwärts zu bewegen, wobei das Ablegeförderband (4, 4') eine höhere Vorwärtsgeschwindigkeit als das Aufnahmeförderband (5, 5') aufweist;
c) Durchführen eines Formungsschritts durch Ablegen der Ziehteigplatte vom Ablegeförderband (4, 4') auf das Aufnahmeförderband (5, 5') mittels der einziehbaren Ablegemittel (4a, 4a') und während der Vorwärts- und Rückwärtsbewegung derselben, wobei eine gefaltete Teigplatte entsteht;
d) Unterziehen der so erhaltenen gefalteten Teigplatte einem Verdichtungsschritt, wodurch eine verdichtete Teigplatte entsteht;
e) Unterziehen der verdichteten Teigplatte einer Teigruhe unter kontrollierten Temperatur- und Feuchtigkeitsbedingungen, wobei eine gegangene Teigplatte entsteht;
f) Backen der gegangenen Teigplatte für einen Zeitraum zwischen 10 und 40 Minuten, vorzugsweise zwischen 15 und 25 Minuten, und bei einer Temperatur zwischen 160 °C und 230 °C, vorzugsweise zwischen 180 °C und 200 °C, wodurch eine gebackene Teigplatte entsteht;
g) optional horizontales Schneiden der gebackenen Teigplatte, wodurch eine erste Schicht gebackene Teigplatte und eine zweite Schicht gebackene Teigplatte entsteht, und Bereitstellen einer Schicht Füllcreme zwischen der ersten Schicht und der zweiten Schicht gebackene Teigplatte;
h) Bereitstellen eines verpackten, haltbaren Backwarenprodukts als Einzelportionen, ausgehend von der gebackenen Teigplatte;
wobei die Vorwärts- und Rückwärtsbewegung der einziehbaren Ablegemittel (4a, 4a') kontinuierlich gemäß einem Zeitzyklus mit einer voreingestellten Dauer erfolgt,
wobei die Rückzugsbewegung der einziehbaren Ablegemittel (4a, 4a') eine Dauer zwischen 10 und 40 %, in Bezug auf die voreingestellte Dauer des Zeitzyklus der Vorwärts- und Rückzugsbewegung der einziehbaren Ablegemitteln (4a, 4a') hat,
wobei die verdichtete Teigplatte, die durch den Verdichtungsschritt d) entsteht eine Dicke zwischen 4 mm und 22 mm aufweist und
wobei das abgepackte lagerstabile Backwarenprodukt aus weichem Teig eine obere Oberfläche und eine gegenüberliegende untere Oberfläche aufweist, wobei die obere Oberfläche ein regelmäßiges Muster aus sich abwechselnden Erhöhungen und Vertiefungen aufweist.

2. Verfahren nach Anspruch 1, wobei die während des Einziehschritts a) erhaltene Ziehteigplatte eine Dicke zwischen 1 mm und 3 mm, vorzugsweise 2,5 mm, aufweist.

3. Verfahren nach einem der Ansprüche 1 bis 2, wobei die Rückzugsbewegung der einziehbaren Ablegemittel (4a, 4a') eine Dauer von 20 % in Bezug auf die voreingestellte Dauer des Zeitzyklus der Vorwärts- und Rückzugsbewegung der einziehbaren Ablegemitteln (4a, 4a') hat.

4. Verfahren nach einem der Ansprüche 1 bis 3, wobei während des Formungsschritts c) die Ziehteigplatte mindestens zweimal auf sich selbst gefaltet wird, vorzugsweise wird die Ziehteigplatte zweimal auf sich selbst gefaltet, noch bevorzugter ist die Vorschubgeschwindigkeit des Aufnahmeförderbandes (5, 5') höchstens 1/3 der Vorschubgeschwindigkeit des Absetzförderbandes (4, 4').

5. Verfahren nach einem der Ansprüche 1 bis 4, wobei während des Formungsschritts c) die Vorschubgeschwindigkeit des Aufnahmeförderbandes (5, 5') zwischen 2 m/min und 15 m/min, vorzugsweise zwischen 3 m/min und 9 m/min, noch bevorzugter zwischen 3,5 m/min und 6,5 m/min beträgt.

6. Verfahren nach einem der Ansprüche 1 bis 5, wobei während des Formungsschritts c) das Ablegeförderband (4, 4') in einer voreingestellten Höhe in Bezug auf das Aufnahmeförderband (5, 5') positioniert ist, wobei die voreingestellte Höhe vorzugsweise zwischen 50 mm und 400 mm, noch bevorzugter zwischen 100 mm und 150 mm liegt.

7. Verfahren nach einem der Ansprüche 1 bis 6, wobei die Länge der Gleitbahn der einziehbaren Ablegemitteln (4a, 4a') zwischen 25 mm und 60 mm, vorzugsweise zwischen 30 mm und 50 mm beträgt.

8. Verfahren nach einem der Ansprüche 1 bis 7, wobei die während des Verdichtungsschritts d) erhaltene verdichtete Teigplatte eine Dicke zwischen 5 mm und 15 mm, aufweist.

9. Verfahren nach einem der Ansprüche 1 bis 8, wobei während des Einziehschritts a) ein erster Teig und ein zweiter Teig eingezogen werden, wobei der zweite Teig vorzugsweise Kakao enthält.

10. Verfahren nach Anspruch 9, wobei der erste Teig und der zweite Teig zunächst einzeln einem vorläufigen Einziehschritt unterzogen werden, wodurch eine Teigplatte des ersten Teigs und eine Teigplatte des zweiten Teigs erhalten werden, und anschließend ein vorläufiger Formungsschritt durchgeführt wird, wodurch ein mehrschichtiger Stapel von Teigplatten erhalten wird, wobei eine Schicht des zweiten Teigs zwischen zwei Schichten des ersten Teigs angeordnet ist.

11. Verfahren nach einem der Ansprüche 1 bis 10, wobei der Teigruheschritt e) unter kontrollierten Temperatur- und Feuchtigkeitsbedingungen für einen Zeitraum zwischen 1 Stunde und 7 Stunden, vorzugsweise zwischen 2 Stunden und 5 Stunden, bei einer Temperatur zwischen 25 °C und 50 °C, vorzugsweise zwischen 30 °C und 40 °C, und unter Feuchtigkeitsbedingungen mit einem Wert zwischen 70 % und 90 % durchgeführt wird.

12. Verfahren nach einem der Ansprüche 1 bis 11, wobei der Schritt g) des horizontalen Schneidens und Füllens die folgenden Teilschritte umfasst:
- horizontales Schneiden der gebackenen Teigplatte in Höhe ihrer Hälfte oder darunter, um eine erste Schicht gebackener Teigplatte und eine zweite Schicht gebackener Teigplatte zu erhalten;
- Aufbringen einer Füllcreme auf die Oberseite der ersten Schicht aus gebackener Teigplatte, wodurch eine erste Schicht aus gebackener Teigplatte erhalten wird, die mit einer Füllschicht bedeckt ist;
- Verbinden der ersten Schicht aus gebackener Teigplatte mit der zweiten Schicht aus gebackener Teigplatte , wobei die zweite Schicht aus gebackener Teigplatte auf die aufgetragene Füllungsschicht gelegt wird.

13. Verfahren nach einem der Ansprüche 1 bis 12, wobei der horizontale Schnitt in einer Höhe zwischen 1/5 und 4/5, vorzugsweise zwischen 2/5 und 3/5, der Höhe der gebackenen Teigplatte durchgeführt wird.

14. Verfahren nach einem der Ansprüche 1 bis 13, wobei die Füllcreme Milch, Kakaobutter, Kakao, Zucker und Gerstenmalz umfasst.

15. Verfahren nach einem der Ansprüche 1 bis 14, wobei die Schritte a) bis h) kontinuierlich durchgeführt werden.

16. Verpacktes, lagerstabiles Backwarenprodukt aus weichem Teig, erhältlich durch das Verfahren gemäß einem der Ansprüche 1 bis 15, umfassend einen gebackenen Teig, der eine mechanische Zugfestigkeit zwischen 1,45 N und 2,40 N, vorzugsweise zwischen 1,57 N und 2,26 N, aufweist, berechnet bei einer Probentemperatur zwischen 35 °C und 40 °C und gemessen mit dem Gerät TA.XT-plusC TEXTURE ANALYSER der Firma Stable Micro System, ausgestattet mit einer Messsonde vom Typ A/PT, wobei das lagerstabile Backwarenprodukt aus weichem Teig eine obere Oberfläche und eine gegenüberliegende untere Oberfläche aufweist, wobei die obere Oberfläche ein regelmäßiges Muster aus sich abwechselnden Erhöhungen und Vertiefungen aufweist.

## Revendications

1. Procédé pour obtenir un produit de boulangerie à pâte molle emballé à longue conservation, éventuellement fourré, comprenant les étapes suivantes:
a) soumettre au moins une pâte à une étape de laminage, de manière à obtenir une feuille de pâte laminée ayant une épaisseur comprise entre 1 mm et 5 mm;
b) acheminer ladite feuille de pâte laminée vers une unité de mise en forme (3; 3'), ladite unité de mise en forme (3; 3') comprenant une bande transporteuse de dépôt (4, 4') et une bande transporteuse de réception (5, 5'), ladite bande transporteuse de dépôt (4, 4') étant pourvue de moyens de dépôt rétractables (4a, 4a') adaptés pour effectuer un mouvement d'avance et de rétraction par rapport à ladite bande transporteuse de réception (5, 5') et pour avancer et se rétracter le long d'un trajet de coulissement ayant une longueur prédéterminée, ladite bande transporteuse de dépôt (4, 4') ayant une vitesse d'avance supérieure à celle de la bande transporteuse de réception (5, 5');
c) par l'intermédiaire desdits moyens de dépôt rétractables (4a, 4a') et lors du mouvement d'avance et de rétraction de ces derniers, réaliser une étape de mise en forme, en déposant ladite feuille de pâte laminée de la bande transporteuse de dépôt (4, 4') à la bande transporteuse de réception (5, 5'), obtenant ainsi une feuille de pâte pliée;
d) soumettre la feuille de pâte pliée ainsi obtenue à une étape de compactage, obtenant ainsi une feuille de pâte compactée;
e) soumettre la feuille de pâte compactée à une étape de levage dans des conditions contrôlées de température et d'humidité, obtenant ainsi une feuille de pâte levée;
f) cuire au four la feuille de pâte levée pendant une période de temps comprise entre 10 et 40 minutes, préférablement entre 15 et 25 minutes, et à une température comprise entre 160°C et 230°C, préférablement entre 180°C et 200°C, obtenant ainsi une feuille de pâte cuite;
g) optionnellement, couper horizontalement ladite feuille de pâte cuite, obtenant ainsi une première couche de feuille de pâte cuite et une deuxième couche de feuille de pâte cuite, et fournir une couche de crème de garniture entre ladite première couche et ladite deuxième couche de feuille de pâte cuite;
h) fournir un produit de boulangerie à pâte molle emballé à longue conservation en portions individuelles, à partir de ladite feuille de pâte cuite;
dans lequel le mouvement d'avance et de rétraction des moyens de dépôt rétractables (4a, 4a') se fait en continu selon un cycle temporel ayant une durée prédéterminée;
dans lequel le mouvement de rétraction des moyens de dépôt rétractables (4a, 4a') a une durée comprise entre 10 et 40% par rapport à la durée prédéterminée du cycle temporel du mouvement d'avance et de rétraction des moyens de dépôt rétractables (4a, 4a');
dans lequel ladite feuille de pâte compactée obtenue lors de l'étape de compactage d) a une épaisseur comprise entre 4 mm et 22 mm; et,
dans lequel ledit produit de boulangerie à pâte molle emballé à longue conservation a une surface supérieure et une surface inférieure opposée, ladite surface supérieure ayant un motif régulier avec des crêtes et des creux alternés.

2. Procédé selon la revendication 1, dans lequel ladite feuille de pâte laminée, obtenue lors de l'étape de laminage a), a une épaisseur comprise entre 1 mm et 3 mm, préférablement égale à 2,5 mm.

3. Procédé selon la revendication 1 ou 2, dans lequel le mouvement de rétraction des moyens de dépôt rétractables (4a, 4a') a une durée égale à 20% par rapport à la durée prédéterminée du cycle temporel du mouvement d'avance et de rétraction des moyens de dépôt rétractables (4a, 4a').

4. Procédé selon l'une quelconque des revendications 1-3, dans lequel, lors de l'étape de mise en forme c), la feuille de pâte laminée est pliée sur elle-même au moins deux fois, préférablement la feuille de pâte laminée étant pliée sur elle-même deux fois, plus préférablement la vitesse d'avance de la bande transporteuse de réception (5, 5') étant égale tout au plus à 1/3 de la vitesse d'avance de la bande transporteuse de dépôt (4, 4').

5. Procédé selon l'une quelconque des revendications 1-4, dans lequel, lors de l'étape de mise en forme c), la vitesse d'avance de la bande transporteuse de réception (5, 5') est comprise entre 2 m/min et 15 m/min, préférablement entre 3 m/min et 9 m/min, plus préférablement entre 3,5 m/min et 6,5 m/min.

6. Procédé selon l'une quelconque des revendications 1-5, dans lequel, lors de l'étape de mise en forme c), la bande transporteuse de dépôt (4, 4') est positionnée à une hauteur prédéterminée par rapport à la bande transporteuse de réception (5, 5'), ladite hauteur prédéterminée étant préférablement comprise entre 50 mm et 400 mm, plus préférablement entre 100 mm et 150 mm.

7. Procédé selon l'une quelconque des revendications 1-6, dans lequel la longueur du trajet de coulissement desdits moyens de dépôt rétractables (4a, 4a') est comprise entre 25 mm et 60 mm, préférablement entre 30 mm et 50 mm.

8. Procédé selon l'une quelconque des revendications 1-7, dans lequel ladite feuille de pâte compactée obtenue lors de l'étape de compactage d) a une épaisseur comprise entre 5 mm et 15 mm.

9. Procédé selon l'une quelconque des revendications 1-8, dans lequel, lors de l'étape de laminage a), une première pâte et une deuxième pâte sont laminées, la deuxième pâte comprenant préférablement du cacao.

10. Procédé selon la revendication 9, dans lequel ladite première pâte et ladite deuxième pâte sont tout d'abord soumises individuellement à une étape de laminage préliminaire, obtenant ainsi une feuille de la première pâte et une feuille de la deuxième pâte, et ensuite on réalise une étape de mise en forme préliminaire, obtenant ainsi un empilement multicouche de feuilles de pâte, une couche de la deuxième pâte étant prise en sandwich entre deux couches de la première pâte.

11. Procédé selon l'une quelconque des revendications 1-10, dans lequel l'étape de levage e) est réalisée dans des conditions contrôlées de température et d'humidité pendant une période de temps comprise entre 1 heure et 7 heures, préférablement entre 2 heures et 5 heures, à une température comprise entre 25°C et 50°C, préférablement entre 30°C et 40°C, et dans des conditions d'humidité ayant une valeur comprise entre 70% et 90%.

12. Procédé selon l'une quelconque des revendications 1-11, dans lequel ladite étape g) de découpe horizontale et de garniture comprend les sous-étapes suivantes:
- réaliser une découpe horizontale de la feuille de pâte cuite à ou en dessous de la moitié de sa hauteur de manière à obtenir une première couche de feuille de pâte cuite et une deuxième couche de feuille de pâte cuite;
- déposer une crème de garniture sur la surface supérieure de ladite première couche de feuille de pâte cuite, obtenant ainsi une première couche de feuille de pâte cuite couverte d'une couche de garniture;
- accoupler la première couche de feuille de pâte cuite à la deuxième couche de feuille de pâte cuite, en positionnant la deuxième couche de feuille de pâte cuite sur la couche de garniture ainsi déposée.

13. Procédé selon l'une quelconque des revendications 1-12, dans lequel ladite découpe horizontale est réalisée à un niveau compris entre 1/5 et 4/5, préférablement entre 2/5 et 3/5, de la hauteur de la feuille de pâte cuite.

14. Procédé selon l'une quelconque des revendications 1-13, dans lequel ladite crème de garniture comprend du lait, du beurre de cacao, du cacao, du sucre et du malt d'orge.

15. Procédé selon l'une quelconque des revendications 1-14, dans lequel lesdites étapes a) à h) sont réalisées en continu.

16. Produit de boulangerie à pâte molle emballé à longue conservation obtenable par le procédé selon l'une quelconque des revendications 1-15, comprenant une pâte cuite qui a une résistance mécanique à la traction comprise entre 1,45 N et 2,40 N, préférablement entre 1,57 N et 2,26 N, calculée à une température d'échantillon comprise entre 35°C et 40°C et mesurée en utilisant l'instrument TA.XT-plusC TEXTURE ANALYSER de la société Stable Micro System, équipé d'une sonde de mesure du type A/PT, ledit produit de boulangerie à pâte molle à longue conservation ayant une surface supérieure et une surface inférieure opposée, ladite surface supérieure ayant un motif régulier avec des crêtes et des creux alternés.
